# EUROPEAN PATENT SPECIFICATION

(11) **EP 3 582 247 B1**
(45) Date of publication and mention of the grant of the patent: **23.02.2022**
(21) Application number: 18177946.3
(22) Date of filing: 15.06.2018
(51) Int. Cl.: H01H 51/00, H01H 50/14

(54) **RELAY**
RELAIS
RELAIS

(43) Date of publication of application: 18.12.2019
(73) Proprietor: Samsung SDI Co., Ltd., Gyeonggi-do 17084 (KR)
(72) Inventor: Lettner, Markus, 8521 Wettmannstätten (AT); Schlick, Michael, 8054 Graz (AT); Vogel, Sebastian, 25821 Bredstedt (DE)
(74) Representative: Gulde & Partner

(56) References cited:
- EP-A1- 3 203 491
- WO-A1-2014/206375
- DE-A1-102014 219 211
- FR-A5- 2 076 814
- US-A- 2 423 135
- US-A1- 2013 342 292

## Description

### Field of the Invention

The present invention relates to a method for improving the EMC characteristics of a relay or of a battery system comprising such a relay.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be a battery module formed of multiple battery submodules, each comprising battery cells coupled in series and/or parallel so as to provide a high energy density, e.g. for a hybrid vehicle. Such battery modules may be mechanically and electrically integrated, equipped with a thermal management system and set up for communication with each other and one or more electrical consumers to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface. The BMS/BMU may further communicate with each of the battery submodules, particularly with a cell supervision circuit (CSC) of each of the battery submodules. The CSC may be further connected to a cell connection and sensing unit (CCU) of one or more of the battery submodules that may interconnect the battery cells of the respective battery submodule.

A battery system may further comprise a protection system to provide a voltage level control of a power interface of the battery system and to enable a fast and reliable safety shutdown of the power interface in the case of non-permissible operating conditions. Such protection system may be adapted to shutdown a power connection between the battery system and an external terminal of the battery system. A typical protection system comprises an electromechanical switch that is usually controlled by a microcontroller (MCU) of the battery system. Usually, one or more relays controlled by a suitable relay driver circuit are utilized as electromechanical switch of such protection system. In order to supply the actual required current to such relay, i.e. switching current, holding current and/or excess current, the relay coils are often operated by a PWM controlled driver. Due to the PWM control, ripple currents may be generated in the relay driving circuit and perpetuate to the controlled load circuit, i.e. the circuit in which the relay switch is arranged. At the same time, perturbations from the load circuit may adversely affect the control relay driver circuit and hence the protection system.

FR 2 076 814 A5 discloses an electromagnetic relay, which shall have reduced capacitive and inductive coupling between the relay control circuit and the switched circuit without using additional shielding means by adapting the constructional design of the relay.

US 2 423 135 A discloses a make and break relay comprising insulating base frame, carrying contact members that are connected to armature that is actuated by a coil such that it closes only one of the break and make contacts at a time, wherein the design of the relay shall lengthen the path for possible stray capacities, thus lowering their respective influence. EP 3203491 A1 discloses magnetic coil driving circuit for magnetic contactor comprising a magnetic coil and a semiconductor switch connected in series to and configured to de-/magnetize the magnetic coil upon turning on/off and a pulse width modulation unit for outputting a pulse signal to the semiconductor switch for turning on/off the switch.

It is thus an object of the present invention to provide a relay, particularly a relay for a battery system, with improved electromagnetic compatibility, EMC. Particularly, a relay shall be provided that has less unwanted emission of electromagnetic interference, EMI, and/or is less susceptible to EMI or other disturbances.

### Description of the Invention

One or more of the drawbacks of the prior art could be avoided or at least reduced by means of the present invention, that is by a method as defined by the appended claims.

An aspect of the present invention relates to a method for improving the electromagnetic compatibility of a relay. Therein the relay comprises a relay coil with a coil beginning and a coil end, both connected to a relay driving circuit as described above. The relay further comprises a relay switch that is disposed in a load circuit, wherein the load circuit may be part of a battery system. The method of the invention comprises the steps of claim 1, The parasitic capacitances may be determined by modelling the relay coil in its specific application case.

Alternatively, the parasitic capacitances may be determined experimentally. Exemplarily, perturbations with a characteristic timeline may be applied to the load circuit at different frequencies and signals received at the terminal ends of the relay coil may be spectrally analyzed for the transmitted components (frequency response) of the perturbations. From such measurements the transfer functions and finally parasitic capacitances between the load circuit and the coil beginning and coil end, respectively, can be determined. Perturbations may be also applied to each of coil beginning and coil end, wherein the frequency response is measured in the load circuit and parasitic capacitances are determined therefrom.

The method of the invention further comprises the step of determining the electromagnetic interference, EMI, between the relay driving circuit and the load circuit, i.e. EMI from the relay driving circuit to the load circuit as well as EMI from the load circuit to the relay driving circuit. Therein, EMI may be determined by modelling the relay coil in its specific application case. Alternatively, the EMI is also determined experimentally, which may also comprise spectral analysis of received signals at the coil beginning, the coil end, and in the load circuit but without applying additional perturbations. Detected crosstalk in either the relay driving circuit or the load circuit may then be connected to specific components, such as e.g. a PWM controller of the relay driving circuit or an inverter of the load circuit, e.g. by correlating the detected crosstalk with the signal patterns of such components. The step of determining EMI between the relay driving circuit and the load circuit preferably further comprises the step of determining a most significant or particularly harmful EMI between these circuits.

In a final step of the method according to the invention, the polarity of the relay coil in the relay driving circuit is determined in dependence of the determined first parasitic capacitance, the determined second parasitic capacitance, and the determined electromagnetic interference, preferably the determined most significant electromagnetic interference. Therein, determining the polarity of the relay coil refers to choosing which terminal end of the relay coil is to be connected to a specific node of the relay driving circuit. As described in more detail above, by choosing the polarity of the relay coil, the transmission of EMI between relay driving circuit and load circuit may be influenced, e.g. by attenuating EMI along a specific transmission path or by directing EMI transmission along a certain transmission path.

In a preferred embodiment, the method of the invention further comprises the step of disposing the smaller one of the first parasitic capacitance and the second parasitic capacitance in a capacitive coupling path of an electromagnetic interference between the relay driving circuit and the load circuit for attenuating the electromagnetic interference transmitted across the capacitive coupling path. Further preferred, the method comprises the step of disposing the smaller parasitic capacitance in a certain capacitive coupling path between a node of the relay driving circuit and the load circuit by connecting the respective terminal end of the relay coil to that node of the relay driving circuit. Particularly preferred, the method comprises the step of connecting the coil end to a node of the relay driving circuit to or from which transmission of electromagnetic interference should be attenuated.

In another preferred embodiment, the method of the invention further comprises the step of disposing the larger one of the first parasitic capacitance and the second parasitic capacitance in a capacitive coupling path of an electromagnetic interference between the relay driving circuit and the load circuit for conducting away the electromagnetic interference via that capacitive coupling path. Further preferred, the method comprises the step of disposing the larger parasitic capacitance in a certain capacitive coupling path between a node of the relay driving circuit and the load circuit by connecting the respective terminal end of the relay coil to that node of the relay driving circuit. Particularly preferred, the method comprises the step of connecting the coil beginning to a node of the relay driving circuit to or from which electromagnetic interference should be conducted away more efficiently.

In a further preferred embodiment of the present invention, the capacitive coupling paths that are considered by determining the parasitic capacitances and electromagnetic interference along this coupling path may extend above the relay driving circuit and the load circuit. In the application case of a battery system of an electric vehicle, the capacitive coupling path preferably comprises the vehicle chassis and/or other electric circuits of the vehicle.

In the method of the invention, a relay is provided, comprising a relay coil, a relay switch, and a relay driving circuit. Therein, the relay driving circuit is configured to operate the relay coil for setting the relay switch either conductive or non-conductive. Above the components explicitly mentioned in the following, the relay may comprise further components that are required for driving the relay. The skilled person is aware of common relays and their common components.

In the method of the invention, the relay comprises a relay coil with a coil beginning and a coil end, both of which are connected to the relay driving circuit. Therein, the coil beginning refers to a first terminal end of the wire forming the coil, while the coil end refers to the other terminal end, i.e. the second terminal end, of that wire. The wire may be wound on a coil core using one of wild winding, helical winding, or orthocyclic winding. However, under certain circumstances, the coil beginning may refer to an innermost layer of coil windings and the coil ending may refer to an outermost layer of coil windings, e.g. if both terminal ends of the coil wire are led away from an innermost or outermost surface of the coil. Preferably the coil comprises, in radial direction, multiple layers of coil windings. The relay coil may be a hollow cylindrical coil with a coil wire wound around a hollow cylindrical core. Further preferred, the coil wire is wound on the core starting with the coil beginning to form an innermost layer and until the coil end is laid on an outermost layer.

The relay of the method of the present invention further comprises a relay switch that is disposed in a load circuit. The relay switch is configured to either close the load circuit for allowing a current to flow through the load circuit (closed state) or to open the load circuit for cutting a current through the load circuit (open state). Therein, the operation of the relay switch, i.e. moving it between the closed state and the open state, is actuated via the relay coil by generating a magnetic filed for moving and holding the relay switch in the aforementioned positions. The skilled person is aware of common relay switches.

According to the method of the present invention, a first parasitic capacitance is formed between the coil beginning and the relay switch and a second parasitic capacitance is formed between the coil end and the relay switch. In other words, a capacitance exists between the relay switch and each of the coil beginning and the coil end simply because of their proximity to each other. If eventually a parasitic capacitance is formed continuously between the coil wire and the relay switch, the first parasitic capacitance and the second parasitic capacitance form the extreme values, i.e. the minimum and maximum, of such continuous parasitic capacitance.

According to the method of the present invention, the first parasitic capacitance is different from the second parasitic capacitance. In other words, the relay coil of the present invention is not symmetric with respect to the transfer functions between the relay coil terminals (coil beginning, coil end) and the relay switch. The inventors found that such asymmetry can be utilized for optimizing the electromagnetic compatibility of a relay (driving circuit) by utilizing the difference in parasitic capacitance for generating directed transmission paths for electromagnetic interference, EMI. The relay of the invention allows for blocking, attenuating and dissipating EMI by exploiting the difference between the first and second parasitic capacitance.

According to a preferred embodiment of the method, the relay switch comprises a relay pallet. The relay pallet refers to the moving part of the relay upon which the magnetic force predominantly acts for actuating, i.e. closing or opening, the relay switch in order to cut or connect the relay working contacts in the load circuit. If a current is supplied to the relay coil for generating an attractive magnetic field, the relay pallet is drawn near the relay coil. In some relays, the relay pallet may even dive at least partially into the cylindrical cavity of the relay coil. The relay pallet may be formed integrally with the relay switch and may thus be considered to form a part of the load circuit. The inventors found that the parasitic coupling capacitance between the relay pallet (relay armature) and the relay coil, i.e. the coil beginning as well as the coil end as the coil's terminal ends, significantly contributes to unwanted crosstalk between the relay driving circuit and the load circuit that is controlled by the relay.

By considering the difference of the first parasitic capacitance between the coil beginning and the relay pallet and the second parasitic capacitance between the coil end and the relay pallet, the crosstalk between the relay driving circuit and the load circuit can be effectively influenced by choosing the polarity of the relay coil in the relay driving circuit. Herein, the polarity of the coil refers to the orientation of the coil terminals within the relay driving circuit. By selecting the coil's polarity based on the specific application case as discussed below, the electromagnetic compatibility of the relay driving circuit can be commensurably improved.

Preferably, the smaller one of the first parasitic capacitance and the second parasitic capacitance is disposed in a capacitive coupling path of an electromagnetic interference between the relay driving circuit and the load circuit. In other words, the smaller parasitic capacitance is formed between the relay switch (relay pallet) and one of the coil beginning and the coil end. In a helically wound coil as described above, with the coil beginning being part of an innermost layer, and wherein the pallet is drawn towards the cylindrical cavity of the relay coil, a capacitive coupling path is then formed between the coil end and the relay pallet. As the smaller one of the first and the second coupling capacity is disposed in this coupling path, the coupling impedance between the relay switch (relay pallet) and the relay coil (coil beginning) is increased. Hence, EMI is less effectively transferred between the relay coil and the relay switch (pallet) along that capacitive coupling path.

Particularly, by choosing the relay coil's polarity such that the smaller parasitic capacitance between one of the coils terminal ends and the relay switch (relay pallet) is disposed in a predetermined, particularly harmful, unwanted, and/or strongest transmission path of electromagnetic interference, the coupling attenuation across this transmission path and consequently coupling attenuation between the relay driving circuit and the load circuit are improved. Preferably, the second parasitic capacitance is smaller than the first parasitic capacitance. Then, the second parasitic capacitance is disposed in a capacitive coupling path of an electromagnetic interference between the relay driving circuit and the load circuit.

In an alternatively preferred embodiment, the larger one of the first parasitic capacitance and the second parasitic capacitance is disposed in a capacitive coupling path of an electromagnetic interference between the relay driving circuit and the load circuit. In other words, the larger parasitic capacitance is formed between the relay switch (relay pallet) and one of the coil beginning and the coil end. In a helically wound coil as described above, with the coil beginning being part of an innermost layer, and wherein the pallet is drawn towards the cylindrical cavity of the relay coil, a capacitive coupling path is then formed between the coil beginning and the relay switch (relay pallet). As the larger one of the first and the second coupling capacity is disposed in such coupling path, the coupling impedance between the relay switch (relay pallet) and relay coil (coil end) along this coupling path is decreased. Hence, in this embodiment EMI is more effectively transferred between the relay coil and the relay switch (pallet) along the specific capacitive coupling path.

Particularly, by choosing the relay coil's polarity such that the larger parasitic capacitance between one of the coils terminal ends and the relay switch (relay pallet) is disposed in specific transmission path of electromagnetic interference, the coupling across this transmission path is increased and hence, interference between the relay driving circuit and the load circuit is predominantly transferred via this coupling path, e.g. for dissipation to ground. Thus, by disposing the larger parasitic capacitance in a coupling path that terminates near electric ground, a bleeding resistor, or a rather insensitive circuit or circuit component, EMI can be intentionally conducted away from more sensitive circuits or circuit components. Preferably, the first parasitic capacitance is larger than the second parasitic capacitance. Then, the first parasitic capacitance is disposed in a capacitive coupling path of an electromagnetic interference between the relay driving circuit and the load circuit.

In a preferred embodiment of the method of the invention, in the relay driving circuit, one of the coil beginning and the coil end is connected to ground via a third node and a switch. The switch is controlled by a PWM controller and is thus configured to close a current path across the relay coil based on a pulse-shaped signal with variable width. The other one of the coil beginning and the coil end is connected to a supply voltage via a fourth node. A relay driving circuit according to this embodiment advantageously allows for a PWM-based control of the relay coil and thus the relay switch. Preferably, a freewheeling diode is connected in parallel to the relay coil between the third node and the fourth node. According to this embodiment, power dissipation in the relay coil is advantageously reduced while holding the relay switch after closing. The supply voltage of the relay driving circuit is preferably lower than a voltage in the load circuit.

According to this embodiment, a source of electromagnetic interference between the relay driving circuit and the load circuit may be disposed in the relay driving circuit. Particularly, a most significant EMI or disturbance source is disposed within the relay driving circuit. Exemplarily, signals emitted from the PWM controller and/or generated by switching the switch of the relay driving circuit generate significant disturbances in the relay driving circuit that influence the load circuit as EMI. This might occur, if the voltage of the load circuit is not significantly larger than that of the relay driving circuit, such as e.g. with a 48V load circuit and a 12V relay driving circuit. According to this embodiment, the smaller one of the first parasitic capacitance and the second parasitic capacitance is connected to the third node, such that transmission of the PWM signal from the relay driving circuit to the load circuit is impeded. Hence, in this preferred embodiment the relay coil's end is connected to the third node.

Alternatively, a source of electromagnetic interference between the relay driving circuit and the load circuit may be disposed in the load circuit. Particularly, a most significant EMI or disturbance source is disposed within the load circuit. Exemplarily, high voltage and/or high frequency signals emitted within the load circuit generate significant disturbances that influence the relay driving circuit as EMI. This might occur, if the voltage of the load circuit is significantly larger than that of the relay driving circuit, such as e.g. with a 400V load circuit and a 12V relay driving circuit. According to this embodiment, the smaller one of the first parasitic capacitance and the second parasitic capacitance is connected to the fourth node. Hence, the larger one of the first parasitic capacitance and the second parasitic capacitance is connected to the third node such that any EMI transmitted from the load circuit is mainly conducted to ground and deterioration of the driver circuit's supply voltage is avoided. Hence, in this preferred embodiment the relay coil's beginning is connected to the third node and the relay coil's end is connected to the fourth node.

In a preferred embodiment of the present invention, the relay is disposed in a battery system comprising a plurality of battery cells that are electrically connected in series between a first node and a second node and a relay according to the invention as described above. Therein the load circuit is configured for connecting the battery cells and the at least one external load. Further, the relay switch is disposed in the load circuit such that it is interconnected between one of the first node and the second node and the at least one external load. The relay driving circuit, the relay coil, and the relay switch may from a protection system of the battery system, e.g. an overcurrent or overheating protection system. Therefore, the relay driving circuit may further comprise input nodes for receiving an input signal related to one or more of a voltage, a current, and a temperature of at least one battery cell of the battery system and may be configured to open or close the relay switch in dependence of this input signal. Further, the relay driving circuit may an integral part of a BMS or BMU of the battery system.

Further preferred, when the relay is disposed in the battery system, an inverter in the load circuit is a source of electromagnetic interference between the relay driving circuit and the load circuit. Particularly, the inverter is a most significant EMI or disturbance source of the battery system. This might occur, e.g. in a high voltage, HV, battery system providing a voltage of e.g. 400 V, wherein the relay driving circuit operates in a low voltage, LV, domain. According to this embodiment, the smaller one of the first parasitic capacitance and the second parasitic capacitance is connected to the fourth node. Particularly preferred, the second parasitic capacitance, i.e. the relay coil end, is connected to the fourth node. The larger, preferably the first parasitic capacitance, i.e. the coil beginning, is connected to the third node. Thus, any EMI transmitted from the load circuit is mainly conducted away via the larger first parasitic capacitance and the third node to ground and a deterioration of the supply voltage is avoided.

Further preferred, the relay is diposed in the battery system and the battery system is disposed in. Preferably, the vehicle is an electric vehicle (EV) or hybrid vehicle (HV) that is powered at least partially by the battery system. In such vehicle further current paths may be considered for optimizing the EMC of the battery system, such as e.g. current paths connecting the relay driving circuit via the first or second parasitic capacitance to other electric circuits of the vehicle, such as e.g. circuits related to an infotainment system, to vehicle control units, or the like. Even the vehicle chassis may be considered as part of a capacitive coupling path comprising one of the first or second parasitic capacitance that can be thus manipulated for reducing EMI.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: schematically illustrates a battery system for the method according to an embodiment;
- Fig. 2: schematically illustrates a relay for the method according to an embodiment;
- Fig. 3: schematically illustrates a detailed view of the relay of Figure 2;
- Fig. 4: schematically illustrates a relay for the method according to an embodiment;
- Fig. 5: schematically illustrates a relay for the method according to an embodiment;
- Fig. 6: schematically illustrates a relay for the method according to an embodiment;
- Fig. 7: schematically illustrates an electric vehicle for the method according to an embodiment; and
- Fig. 8: schematically illustrates a HV battery system for the method according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to the illustrated embodiments. Accordingly, processes, elements, and techniques that are not considered necessary to those having ordinary skill in the art for a complete understanding of the aspects and features of the present invention may not be described. Further, in the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5%.

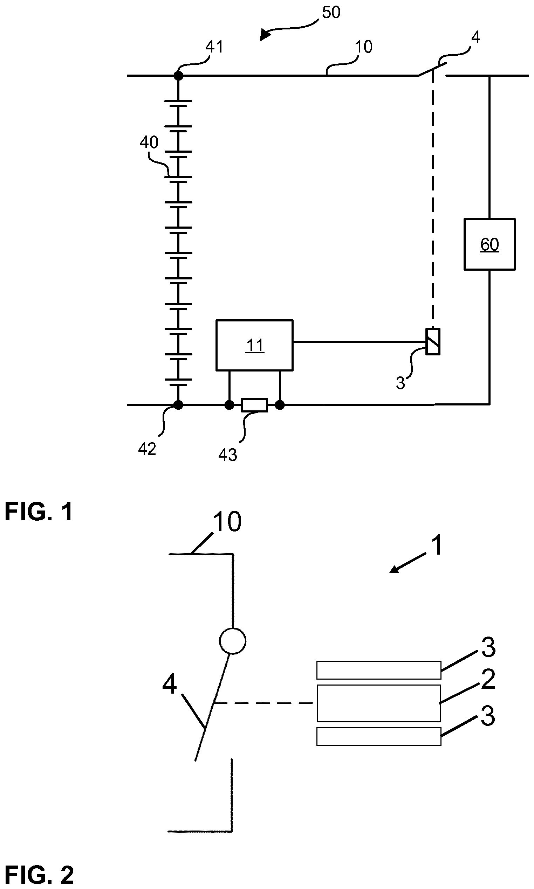

Figure 1 illustrates a schematic view of a battery system 50 for the method according to an embodiment. Therein, a plurality of battery cells 40 is connected in series between a first node 41 and a second node 42. Additionally, battery cells 40 may be connected in parallel between the first node 41 and the second node 42, forming an *XsYp* configuration between these nodes 41, 42. Further, battery submodules (not shown) may be connected between these nodes 41, 42.

Each of the twelve battery cells 40 may provide a voltage of approximately 4 V such that a voltage VDD of approximately 48 V applies between the first node 41 and the second node 42. However, other voltages may also apply between the first node 41 and the second node 42. An external load 60 is supplied with this voltage of the battery cells 40. A relay switch 4 is interconnected as power switch between the first node 41 and the external load 60 and is controlled via a relay coil 3 for controlling the power supply to the external load 60.

The relay coil 3 is controlled via the relay driving circuit 11 that is configured for controlling the relay coil 3 for emergency cut off between the battery cells 40 and the external load 60. Above that relay driving circuit 11 may be configured for controlling the current provided to the relay coil 3 via pulse width modulation during holding relay switch 4 via the relay coil 3.

The relay driving circuit 11 receives a differential input via two input nodes that are connected upstream and downstream, respectively, of a shunt resistor 43 that is interconnected between the second node 42 and the external load 60. Hence, these input nodes provide a voltage drop over the shunt resistor 43 as an input signal to relay driving circuit 11, i.e. for cutting off the batteries 40 from the external load 60 in an overcurrent situation. The relay driving circuit 11 may receive other input signals, e.g. related to temperatures of the batteries 40 or may not receive any input signal at all.

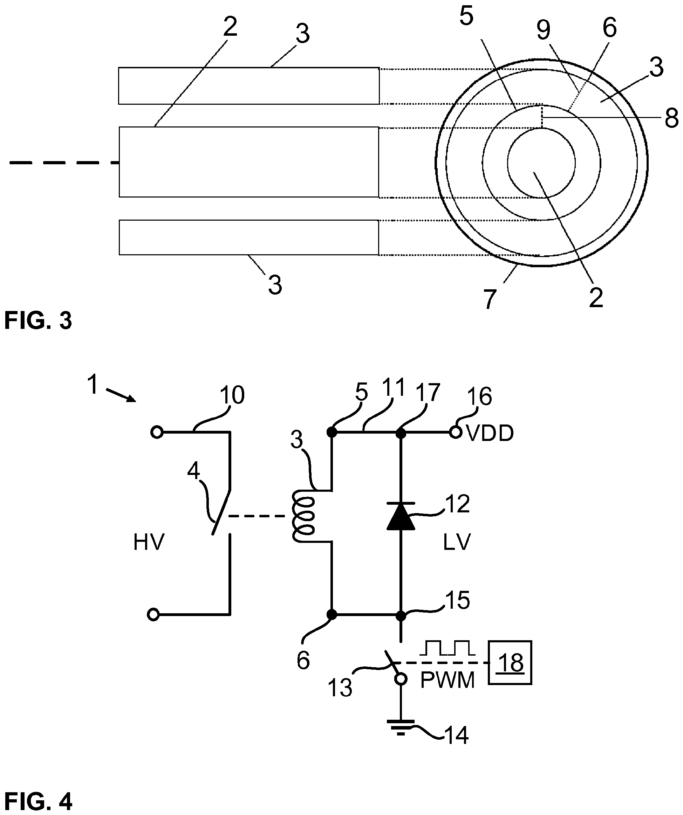

Figures 2 and 3 illustrate a relay 1 for the method according to an embodiment. The relay 1 comprises a relay coil 3 and a relay switch 4 as main components. These components may be considered parts of relay 1 but may also be considered parts of a relay driving circuit 11. The relay coil 3 comprises a coil wire (not shown) that is helically wound on hollow cylindrical core so as to form a hollow cylindrical coil 3. A relay pallet 2 is disposed in the central cavity of the relay coil and is connected with relay switch 4. Thus a magnetic field generated by the relay coil 3 can actuate the relay switch 4 via the relay pallet 2. The relay switch 4 is arranged in a load circuit 10 and is configured for allowing a current to flow in the load circuit 10 (closed state) or cuts a current in the load circuit (open state). As only shown in Figure 3, the relay coil 3 is arranged within a magnetic bucket 7 that is also of hollow cylindrical form and fits the coil 3.

As further shown in the cross section of Figure 3, the relay coil 3 comprises a thickness in a radial direction as it is formed of multiple layers of wound coil wire. Particularly, the coil wire is wound around a core starting with a coil beginning 5 forming an innermost layer of the relay coil 3. The coil wire is then wound around the core multiple times until a coil end 6 is laid upon an outermost layer of the relay coil 3. As indicated by dotted lines in Figure 3, a first parasitic capacitance 8 is formed between the coil beginning 5 and the relay pallet 2 and a second parasitic capacitance 9 is formed between the coil end 6 and the relay pallet 2.

Figure 4 schematically illustrates a wiring diagram of a relay 1 for the method according to an embodiment. The relay 1 comprises a low voltage, LV, relay driving circuit 11 with a relay coil and a high voltage, HV, load circuit 10 with a relay switch 4 that is controlled by the relay coil 3. In the relay driving circuit 11 the coil beginning 5 is connected to a LV supply voltage VDD 16 via a fourth node 11. The coil end 6 is connected to ground 14 via a third node 15 and a switch 13. The switch 13 is controlled via a PWM controller 18 that opens and closes the switch 13 based on a PWM signal. A freewheeling diode 12 is connected in parallel to the relay coil 3 between third node 15 and fourth node 17 with its anode pointing to the third node 15.

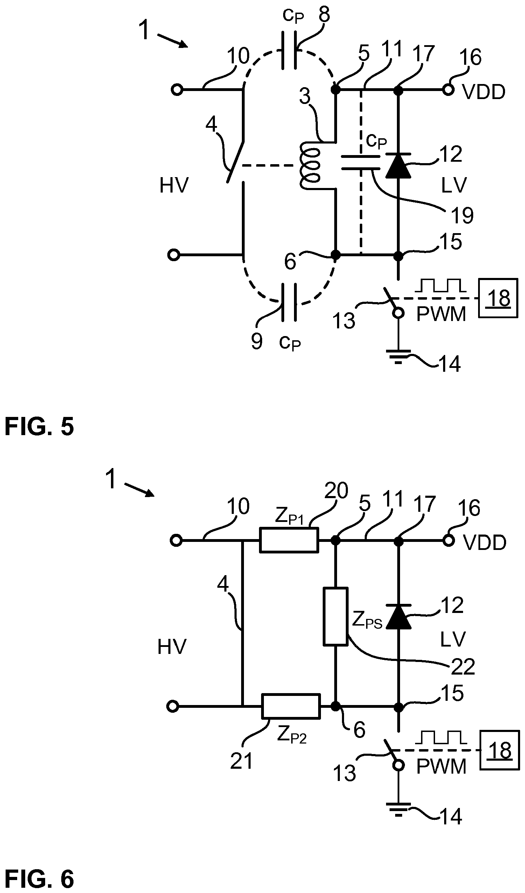

As illustrated in the extended wiring diagram of Figure 5, a first parasitic capacitance C_{P} 8 is formed between the relay beginning 5 and the load circuit 10, particularly the relay switch 4. A second parasitic capacitance C_{P} 9 is formed between the relay end 6 and the load circuit 10, particularly the relay switch 4. The difference in the links of the parasitic capacitances 8, 9 to the load circuit 10 (relay switch 4) is for illustrative purposes only. The capacitances 8, 9 both link to the relay switch 4 (pallet 2). The first parasitic capacitance 8 is larger than the second parasitic capacitance 9 as a distance between the coil beginning 5 and the relay pallet 2 is smaller than that between the coil end 9 and the relay pallet 2 (see Fig. 3). A third parasitic capacitance CP 19 is formed in parallel to the relay coil 3.

Figure 6 shows an abstract wiring diagram of relay 1 as a four pole for the method according to an embodiment. Therein, load circuit 10 is illustrated with closed relay switch 4. Further, the first parasitic capacitance 8 is illustrated as first complex parasitic coupling impedance Z_{P1} and the second parasitic capacitance 9 is illustrated as second complex parasitic coupling impedance Z_{P2}. Further, the relay coil 3 and the third parasitic capacitance 19 are both illustrated as complex coil impedance 22. In the illustration of Figure 6, the first complex parasitic coupling impedance Z_{P1} is unequal from the second complex parasitic coupling impedance Z_{P2} due to the relay coil's 3 asymmetry with respect to coil beginning 5 and end 6 as shown in Fig. 3.

As the first complex parasitic coupling impedance Z_{P1} is smaller than the second complex parasitic coupling impedance Z_{P2}, EMI transmission between the load circuit 10 and the relay driving circuit 11 occurs predominantly via the first complex parasitic coupling impedance Z_{P1}. Hence, if the PWM signal provided by the PWM controller 18 is the most significant source of EMI in the relay 1, this signal could then advantageously not couple strongly into the load circuit 10. Alternatively, if a main source of EMI is located within the load circuit 10, the coil beginning 5 should be connected to the third node 15. Then, as EMI transmission between the load circuit 10 and the relay driving circuit 11 would again predominantly occur via the first complex parasitic coupling impedance Z_{P1} such that any EMI emitted from load circuit 10 would then predominantly be conducted away to ground via Z_{P1} and the third node 15.

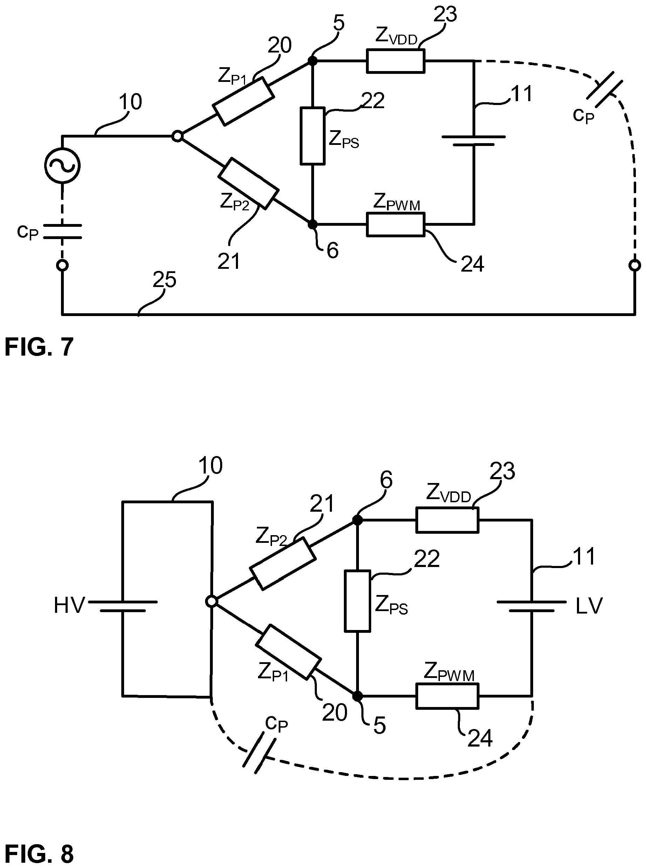

Figure 7 schematically illustrates an electric vehicle for the method according to an embodiment. The electric vehicle comprises a relay driving circuit 11 and a load circuit 10 as illustrated in Figure 6. For illustrative purposes, the first and second parasitic coupling impedances 20, 21 are connected to the same node, i.e. illustrated as a three pole. Further, the line losses between the relay beginning 5 and the fourth node 17 of Figure 6 as well as the influences of supply voltage VDD 16 are summarized as fourth coupling impedance 23. Similarly, the line losses between the relay end 6 and the third node 15 of Figure 6 as well as the influences of switch 13 and PWM controller 18 are summarized as fifth coupling impedance 24.

In the vehicle of Figure 7 a vehicle chassis 25 is capacitively coupled to both the load circuit 10 and to supply voltage node 17 (see Figure 6) of the relay driving circuit 11. Hence, a capacitive coupling path exists from the load circuit 10 via the first parasitic coupling impedance 20 to the coil beginning 5 and via the fourth coupling impedance 23 from the relay driving circuit 11 to the vehicle chassis 25 and from there back to the load circuit 10. This coupling path has a high total coupling capacity and thus a low total coupling impedance.

Hence, by turning the relay coil 3 such that the second parasitic coupling impedance Z_{P2} 21 is disposed within this coupling path instead of the first parasitic coupling impedance Z_{P1} 20, i.e. by connecting the coil end 6 instead of the coil beginning 5 to the fourth node 17, the total coupling capacity of the coupling path is minimized and hence the total coupling impedance of the coupling path is maximized. Thus any EMI transmission between load circuit 10 and relay driving circuit 11 across this coupling path is attenuated.

Figure 8 schematically illustrates a HV battery system for the method according to an embodiment. The HV battery system comprises a HV load circuit 10 and a relay driving circuit 11 that are principally configured as shown in Figure 6. For illustrative purposes, the first and second parasitic coupling impedances 20, 21 are connected to the same node, i.e. illustrated as a three pole. Further, line losses between the relay end 6 and the fourth node 17 of Figure 6 as well as the influences of supply voltage VDD 16 are summarized as fourth coupling impedance 23. Also, line losses between the relay beginning 5 and third node 15 of Figure 6 and the influences of switch 13 and PWM controller 18 are summarized as fifth coupling impedance 24.

In the battery system of Figure 8 a capacitive coupling path exists from the load circuit 10 via the first parasitic coupling impedance Z_{P1} 20 to the coil beginning 5 and via the fifth coupling impedance 24 from the relay driving circuit 11 to the load circuit 10. Hence, this coupling path again has a high total coupling capacity and thus a low total coupling impedance.

Thus, by positioning the relay coil 3 such that the second parasitic coupling impedance Z_{P2} 21 is disposed within this coupling path instead of the first parasitic coupling impedance Z_{P1} 20, i.e. by connecting the coil end 6 instead of the coil beginning 5 to the third node 15, the total coupling capacity of the coupling path is minimized and hence the total coupling impedance of the coupling path is maximized. Thus any EMI transmission between load circuit 10 and relay driving circuit 11 across this coupling path is attenuated.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 1: relay
- 2: relay pallet
- 3: relay coil
- 4: relay switch
- 5: relay coil beginning
- 6: relay coil end
- 7: magnetic bucket
- 8: first parasitic capacitance
- 9: second parasitic capacitance
- 10: HV battery system (load circuit)
- 11: relay driving circuit
- 12: freewheeling diode
- 13: switch
- 14: ground
- 15: third node
- 16: supply voltage
- 17: fourth node
- 18: PWM controller
- 19: third parasitic capacitance
- 20: first parasitic coupling impedance
- 21: second parasitic coupling impedance
- 22: complex coil impedance
- 23: fourth coupling impedance
- 24: fifth coupling impedance
- 25: vehicle chassis
- 40: battery cell
- 41: first node
- 42: second node
- 43: shunt resistor
- 50: battery system
- 60: external load

## Claims

1. Method for improving the electromagnetic compatibility of a relay (1) with a relay coil (3) with a coil beginning (5) and a coil end (6) connected to a relay driving circuit (11) and with a relay switch (4) disposed in a load circuit (10), the method comprising the steps:
wherein a first parasitic capacitance (8) is formed between the coil beginning (5) and the relay switch (4) and a second parasitic capacitance (9) is formed between the coil end (6) and the relay switch (4),
wherein the first parasitic capacitance (8) is different from the second parasitic capacitance (9),
wherein one of the coil beginning (5) and the coil end (6) is connected to ground (14) via a third node (15) and a switch (13), wherein the other one of the coil beginning (5) and the coil end (6) is connected to a supply voltage (16) via a fourth node (17), and wherein the switch (13) is controlled by a PWM controller (18), and
the method comprising the steps:
determining said first parasitic capacitance (8);
Determining said second parasitic capacitance (9);
Determining electromagnetic interference between the relay driving circuit (11) and the load circuit (10); and
if a source of electromagnetic interference between the relay driving circuit (11) and the load circuit (10) is disposed in the relay driving circuit (11), the polarity of the relay coil is applied so that the smaller one of the first parasitic capacitance (8) and the second parasitic capacitance (9) is connected to the third node (15), and
if a source of electromagnetic interference between the relay driving circuit (11) and the load circuit (10) is disposed in the load circuit (10), the polarity of the relay coil is applied so that the smaller one of the first parasitic capacitance (8) and the second parasitic capacitance (9) is connected to the fourth node (17).

2. Method according to claim 1, wherein the relay switch (4) comprises a relay pallet (2), and wherein the first parasitic capacitance (8) is formed between the coil beginning (5) and the relay pallet (2) and the second parasitic capacitance (9) is formed between the coil end (6) and the relay pallet (2).

3. Method according to claim 1 or 2, wherein the smaller one of the first parasitic capacitance (8) and the second parasitic capacitance (9) is disposed in a capacitive coupling path of an electromagnetic interference between the relay driving circuit (11) and the load circuit (10) for attenuating the electromagnetic interference.

4. Method according to any one of the preceding claims, wherein the larger one of the first parasitic capacitance (8) and the second parasitic capacitance (9) is disposed in a capacitive coupling path of an electromagnetic interference between the relay driving circuit (11) and the load circuit (10) for dissipating the electromagnetic interference.

5. Method according to claim 1, wherein the PWM controller (18) is the source of the electromagnetic interference between the relay driving circuit (11) and the load circuit (10).

6. Method according to any one of the preceding claims, wherein the second parasitic capacitance (9) is smaller than the first parasitic capacitance (8).

7. Method according to any one of the preceding claims, wherein the relay (1) is disposed in a battery system (50), comprising a plurality of battery cells (40) electrically connected in series between a first node (41) and a second node (42), wherein the load circuit (10) is configured for connecting the battery cells (40) and the at least one external load (60), and wherein the relay switch (4) is interconnected between the first node (41) or the second node (42) and the at least one external load (60).

8. Method according to claim 7,
wherein an inverter in the load circuit (10) is a source of electromagnetic interference between the relay driving circuit (11) and the load circuit (10), and
wherein the smaller one of the first parasitic capacitance (8) and the second parasitic capacitance (9) is connected to the fourth node (17).

9. Method according to claim 7 or 8, wherein the battery system (50) is disposed in a vehicle.

10. Method according to any one of the preceding claims, wherein the capacitive coupling path comprises a vehicle chassis (25).

## Patentansprüche

1. Verfahren zur Verbesserung der elektromagnetischen Verträglichkeit eines Relais (1) mit einer Relaisspule (3) mit einem Spulenanfang (5) und einem Spulenende (6), die mit einer Relaistreiberschaltung (11) verbunden sind, und mit einem Relaisschalter (4), der in einem Lastromkreis (10) angeordnet ist, wobei das Verfahren die folgenden Schritte aufweist:
wobei eine erste parasitäre Kapazität (8) zwischen dem Spulenanfang (5) und dem Relaisschalter (4) ausgebildet ist und eine zweite parasitäre Kapazität (9) zwischen dem Spulenende (6) und dem Relaisschalter (4) ausgebildet ist,
wobei sich die erste parasitäre Kapazität (8) von der zweiten parasitären Kapazität (9) unterscheidet,
wobei einer/s des Spulenanfangs (5) und des Spulenendes (6) über einen dritten Knoten (15) und einen Schalter (13) mit Erde (14) verbunden ist, wobei der/das andere des Spulenanfangs (5) und des Spulenendes (6) über einen vierten Knoten (17) mit einer Versorgungsspannung (16) verbunden ist, und wobei der Schalter (13) von einem PBM-Regler (18) gesteuert wird, und das Verfahren die folgenden Schritte aufweist:
Bestimmen der besagten ersten parasitären Kapazität (8);
Bestimmen der besagten zweiten parasitären Kapazität (9);
Bestimmen einer elektromagnetischen Interferenz zwischen der Relaistreiberschaltung (11) und dem Lastromkreis (10); und
wenn eine Quelle elektromagnetischer Interferenz zwischen der Relaistreiberschaltung (11) und dem Lastromkreis (10) in der Relaistreiberschaltung (11) angeordnet ist, wird die Polarität der Relaisspule angewandt, sodass die kleinere der ersten parasitären Kapazität (8) und der zweiten parasitären Kapazität (9) mit dem dritten Knoten (15) verbunden ist, und,
wenn eine Quelle elektromagnetischer Interferenz zwischen der Relaistreiberschaltung (11) und dem Lastromkreis (10) im Lastromkreis (10) angeordnet ist, wird die Polarität der Relaisspule angewandt, sodass die kleinere der ersten parasitären Kapazität (8) und der zweiten parasitären Kapazität (9) mit dem vierten Knoten (17) verbunden ist.

2. Verfahren nach Anspruch 1, wobei der Relaisschalter (4) eine Relaispalette (2) aufweist, und wobei die erste parasitäre Kapazität (8) zwischen dem Spulenanfang (5) und der Relaispalette (2) ausgebildet ist und die zweite parasitäre Kapazität (9) zwischen dem Spulenende (6) und der Relaispalette (2) ausgebildet ist.

3. Verfahren nach Anspruch 1 oder 2, wobei die kleinere der ersten parasitären Kapazität (8) und der zweiten parasitären Kapazität (9) in einem kapazitiven Kopplungspfad einer elektromagnetischen Interferenz zwischen der Relaistreiberschaltung (11) und dem Lastromkreis (10) zum Abschwächen der elektromagnetischen Interferenz angeordnet ist.

4. Verfahren nach einem der vorhergehenden Ansprüche, wobei die größere der ersten parasitären Kapazität (8) und der zweiten parasitären Kapazität (9) in einem kapazitiven Kopplungspfad einer elektromagnetischen Interferenz zwischen der Relaistreiberschaltung (11) und dem Lastromkreis (10) zum Ableiten der elektromagnetischen Interferenz angeordnet ist.

5. Verfahren nach Anspruch 1, wobei der PBM-Regler (18) die Quelle der elektromagnetischen Interferenz zwischen der Relaistreiberschaltung (11) und dem Lastromkreis (10) ist.

6. Verfahren nach einem der vorhergehenden Ansprüche, wobei die zweite parasitäre Kapazität (9) kleiner als die erste parasitäre Kapazität (8) ist.

7. Verfahren nach einem der vorhergehenden Ansprüche, wobei das Relais (1) in einem Batteriesystem (50) angeordnet ist, das eine Vielzahl von Batteriezellen (40), die zwischen einem ersten Knoten (41) und einem zweiten Knoten (42) elektrisch in Reihe geschaltet sind, aufweist, wobei der Lastromkreis (10) konfiguriert ist, um die Batteriezellen (40) und die zumindest eine externe Last (60) zu verbinden, und wobei der Relaisschalter (4) zwischen dem ersten Knoten (41) oder dem zweiten Knoten (42) und der zumindest einen externen Last (60) verschaltet ist.

8. Verfahren nach Anspruch 7,
wobei ein Wechselrichter im Laststromkreis (10) eine Quelle elektromagnetischer Interferenz zwischen der Relaistreiberschaltung (11) und dem Laststromkreis (10) ist, und
wobei die kleinere der ersten parasitären Kapazität (8) und der zweiten parasitären Kapazität (9) mit dem vierten Knoten (17) verbunden ist.

9. Verfahren nach Anspruch 7 oder 8, wobei das Batteriesystem (50) in einem Fahrzeug angeordnet ist.

10. Verfahren nach einem der vorhergehenden Ansprüche, wobei der kapazitive Kopplungspfad ein Fahrgestell (25) aufweist.

## Revendications

1. Procédé pour améliorer la compatibilité électromagnétique d'un relais (1) avec une bobine de relais (3) ayant un début de bobine (5) et une fin de bobine (6) connectés à un circuit d'attaque de relais (11) et avec un commutateur de relais (4) disposé dans un circuit de charge (10), le procédé comprenant les étapes :
dans lequel une première capacité parasite (8) est formée entre le début de bobine (5) et le commutateur de relais (4) et une seconde capacité parasite (9) est formée entre la fin de bobine (6) et le commutateur de relais (4),
dans lequel la première capacité parasite (8) est différente de la seconde capacité parasite (9),
dans lequel l'un parmi le début de bobine (5) et la fin de bobine (6) est connecté à la masse (14) via un troisième nœud (15) et un commutateur (13), dans lequel l'autre parmi le début de bobine (5) et la fin de bobine (6) est connecté à une tension d'alimentation (16) via un quatrième nœud (17), et dans lequel le commutateur (13) est commandé par un dispositif de commande PWM (18), et
le procédé comprenant les étapes consistant à :
déterminer ladite première capacité parasite (8) ;
déterminer ladite seconde capacité parasite (9) ;
déterminer une interférence électromagnétique entre le circuit d'attaque de relais (11) et le circuit de charge (10) ; et
si une source d'interférence électromagnétique entre le circuit d'attaque de relais (11) et le circuit de charge (10) est disposée dans le circuit d'attaque de relais (11), la polarité de la bobine de relais est appliquée de sorte que la plus petite de la première capacité parasite (8) et de la seconde capacité parasite (9) est connectée au troisième nœud (15), et
si une source d'interférence électromagnétique entre le circuit d'attaque de relais (11) et le circuit de charge (10) est disposée dans le circuit de charge (10), la polarité de la bobine de relais est appliquée de sorte que la plus petite de la première capacité parasite (8) et de la seconde capacité parasite (9) est connectée au quatrième nœud (17).

2. Procédé selon la revendication 1, dans lequel le commutateur de relais (4) comprend une palette de relais (2), et dans lequel la première capacité parasite (8) est formée entre le début de bobine (5) et la palette de relais (2) et la seconde capacité parasite (9) est formée entre la fin de bobine (6) et la palette de relais (2).

3. Procédé selon la revendication 1 ou 2, dans lequel la plus petite de la première capacité parasite (8) et de la seconde capacité parasite (9) est disposée dans un chemin de couplage capacitif d'une interférence électromagnétique entre le circuit d'attaque de relais (11) et le circuit de charge (10) pour atténuer l'interférence électromagnétique.

4. Procédé selon l'une quelconque des revendications précédentes, dans lequel la plus grande de la première capacité parasite (8) et de la seconde capacité parasite (9) est disposée dans un chemin de couplage capacitif d'une interférence électromagnétique entre le circuit d'attaque de relais (11) et le circuit de charge (10) pour dissiper l'interférence électromagnétique.

5. Procédé selon la revendication 1, dans lequel le dispositif de commande PWM (18) est la source de l'interférence électromagnétique entre le circuit d'attaque de relais (11) et le circuit de charge (10).

6. Procédé selon l'une quelconque des revendications précédentes, dans lequel la seconde capacité parasite (9) est inférieure à la première capacité parasite (8).

7. Procédé selon l'une quelconque des revendications précédentes, dans lequel le relais (1) est disposé dans un système de batterie (50), comprenant une pluralité d'éléments de batterie (40) connectés électriquement en série entre un premier nœud (41) et un deuxième nœud (42), dans lequel le circuit de charge (10) est configuré pour connecter les éléments de batterie (40) et l'au moins une charge externe (60), et dans lequel le commutateur de relais (4) est interconnecté entre le premier nœud (41) ou le deuxième nœud (42) et l'au moins une charge externe (60).

8. Procédé selon la revendication 7,
dans lequel un onduleur dans le circuit de charge (10) est une source d'interférence électromagnétique entre le circuit d'attaque de relais (11) et le circuit de charge (10), et
dans lequel la plus petite de la première capacité parasite (8) et de la seconde capacité parasite (9) est connectée au quatrième nœud (17).

9. Procédé selon la revendication 7 ou 8, dans lequel le système de batterie (50) est disposé dans un véhicule.

10. Procédé selon l'une quelconque des revendications précédentes, dans lequel le chemin de couplage capacitif comprend un châssis de véhicule (25).
